**Europäisches Patentamt**

**European Patent Office**

**Office européen des brevets**

(19)

(11) Veröffentlichungsnummer: **0 238 979**
**A2**

## (12) EUROPÄISCHE PATENTANMELDUNG

(21) Anmeldenummer: **87103854.3**

(22) Anmeldetag: **17.03.87**

(51) Int. Cl.⁴: **G05D 27/00** , **F24F 11/00**

(30) Priorität: **25.03.86 DE 3610069**

(43) Veröffentlichungstag der Anmeldung:
**30.09.87 Patentblatt 87/40**

(84) Benannte Vertragsstaaten:
**AT CH DE LI NL SE**

(71) Anmelder: **Siemens Aktiengesellschaft Berlin und München**
**Wittelsbacherplatz 2**
**D-8000 München 2(DE)**

(72) Erfinder: **Bork, Peter, Dipl.-Ing.**
**Ferdinand-Keller-Strasse 5**
**D-7500 Karlsruhe 21(DE)**
Erfinder: **Graf, Herbert, Dipl.-Ing.**
**Schumanstrasse 7d**
**D-6729 Wörth 2(DE)**
Erfinder: **Linzenkirchner, Edmund, Dipl.-Ing.**
**Mozartstrasse 4h**
**D-7514 Eggenstein(DE)**

(54) **Anordnung zum Regeln von Temperatur und Feuchte.**

(57) Es ist bekannt, im Zuluftkanal (ZK) von zu klimatisierenden Räumen (RA) als Klimaaggregate einen Mischer (MK), einen Vorerhitzer (VE), einen Kühler (K), einen Befeuchter (W) und einen Nacherhitzer (NE) anzuordnen. Temperatur und Feuchte von Zu- und/oder Abluft des zu klimatisierenden Raumes werden gemessen und einem Temperaturregler (TR1, TR2) mit einer nachgeschalteten Temperatur-Sequenzsteuerung (TS) bzw. einem Feuchteregler (FR1, FR2) mit einer nachgeschalteten Feuchte-Sequenzsteuerung (FS) zugeführt. An die Temperatur-Sequenzsteuerung (TS) sind der Mischer (MK), der Vorerhitzer (VE), der Kühler (K) und der Nacherhitzer (NE) angeschlossen. Gemäß der vorliegenden Erfindung steuert die Feuchte-Sequenzsteuerung (FS) den Befeuchter (W) und zum Entfeuchten der Zuluft den Nacherhitzer (NE) an. Dadurch wird bei allen wesentlichen Betriebszuständen eine energiesparende Fahrweise erreicht.

Hauptanwendungsgebiet der Erfindung sind Klimaanlagen.

FIG 1

EP 0 238 979 A2

## Anordnung zum Regeln von Temperatur und Feuchte

Die Erfindung betrifft eine Anordnung zum Regeln von Temperatur und Feuchte gemäß dem Oberbegriff des Anspruchs 1.

Aus dem Buch "Regelungstechnik in der Versorgungstechnik", Verlag C. F. Müller GmbH Karlsruhe, 1983, Seite 388 ist es bekannt, Klimaaggregate an Sequenzsteuerungen zu schalten. Diese Sequenzsteuerungen dienen dazu, die Ausgangssignale der Regler für Temperatur und Feuchte abhängig vom jeweiligen Betriebszustand zu unterschiedlichen Aggregaten durchzuschalten, wobei hierzu die Endkontakte der Aggregate und gegebenenfalls zusätzliche Relaiskombinationen herangezogen werden. Die Nachteile solcher Anordnungen sind ihre nicht immer energieoptimale Betriebsweise und die Neigung zu Instabilitäten in bestimmten Betriebszuständen.

Aus der DE-OS 34 39 288 ist ein Verfahren zum Optimieren des Energieverbrauchs bei der Raumklimatisierung bekannt, bei dem aus den gespeicherten Werten der Betriebsparameter der einzelnen Klimaaggregate sowie dem Sollzustand der Zuluft und den aktuellen Zuständen der Außenluft und der Abluft energetische Vergleichswerte berechnet werden, aufgrund derer jeweils diejenigen Klimaaggregate in Betrieb genommen werden, mit denen der dem im sogenannten h-x-Diagramm von Mollier für feuchte Luft darstellbaren Sollzustand entsprechende Zuluftzustand mit einem Minimum an Energieaufwand erreichbar ist. In dem erwähnten Mollier-Diagramm wird die Temperatur bzw. die Enthalpie der Luft gegen die Feuchte aufgetragen. Das bekannte Verfahren hat den Nachteil, daß es einen hohen Rechenaufwand erfordert und genaue Kenntnisse über die Eigenschaften der Klimaaggregate voraussetzt.

Der vorliegenden Erfindung liegt die Aufgabe zugrunde, eine Anordnung zum Regeln von Temperatur und Feuchte gemäß dem Oberbegriff des Anspruchs 1 zu schaffen, mit der bei geringem Energieverbrauch die Klimaaggregate optimal eingesetzt werden und die mit geringem automatisierungstechnischem Aufwand realisiert werden kann.

Erfindungsgemäß wird diese Aufgabe mit den im kennzeichnenden Teil des Anspruchs 1 angegebenen Maßnahmen gelöst.

Für die Inbetriebnahme der neuen Anordnung sind im Vergleich zu den bekannten Verfahren nur geringe Kenntnisse über die Klimaaggregate erforderlich. Als Klimaaggregate sind zweckmäßig eine Energierückgewinnungseinrichtung, z. B. ein Wärmetauscher oder eine Mischkammer, ein Vor- und ein Nacherhitzer, ein Kühler und ein Befeuchter vorgesehen. Vorteilhaft sind solche Energie-Rückgewinnungseinrichtungen, z. B. Mischkammern oder hygroskopische Rotationswärmetauscher, mit denen in der Abluft der klimatisierten Räume enthaltene Wärme und Feuchte auf die Zuluft übertragen werden. Bis auf den Befeuchter sind alle Klimaaggregate von der Temperatur-Sequenzsteuerung angesteuert, und zwar in der Weise, daß zunächst versucht wird, die gewünschte Temperatur mit Hilfe der Energie-Rückgewinnungseinrichtung einzustellen. Reicht dies nicht aus, muß entweder gekühlt oder geheizt werden. Im Gegensatz zu bekannten Klimaanlagen ist der Feuchte-Sequenzsteuerung nicht der Kühler (K), sondern ein Heizaggregat nachgeordnet, das zum Entfeuchten eingeschaltet wird. Der Temperaturregler reagiert darauf mit einer geeigneten Ansteuerung der Energie-Rückgewinnungseinrichtung und gegebenenfalls des Kühlers, wodurch mit besonders geringem Energieverbrauch gefahren wird. Die Anordnung eignet sich zum Regeln sowohl der absoluten wie auch der relativen Feuchte.

Anhand der Zeichnungen werden im folgenden die Erfindung sowie weitere Ausgestaltungen und Vorteile näher beschrieben und erläutert.

Figur 1 zeigt das Prinzipschaltbild eines Ausführungsbeispiels der Erfindung.

Die Figuren 2 bis 4 veranschaulichen die optimale Fahrweise der Anordnung nach Figur 1.

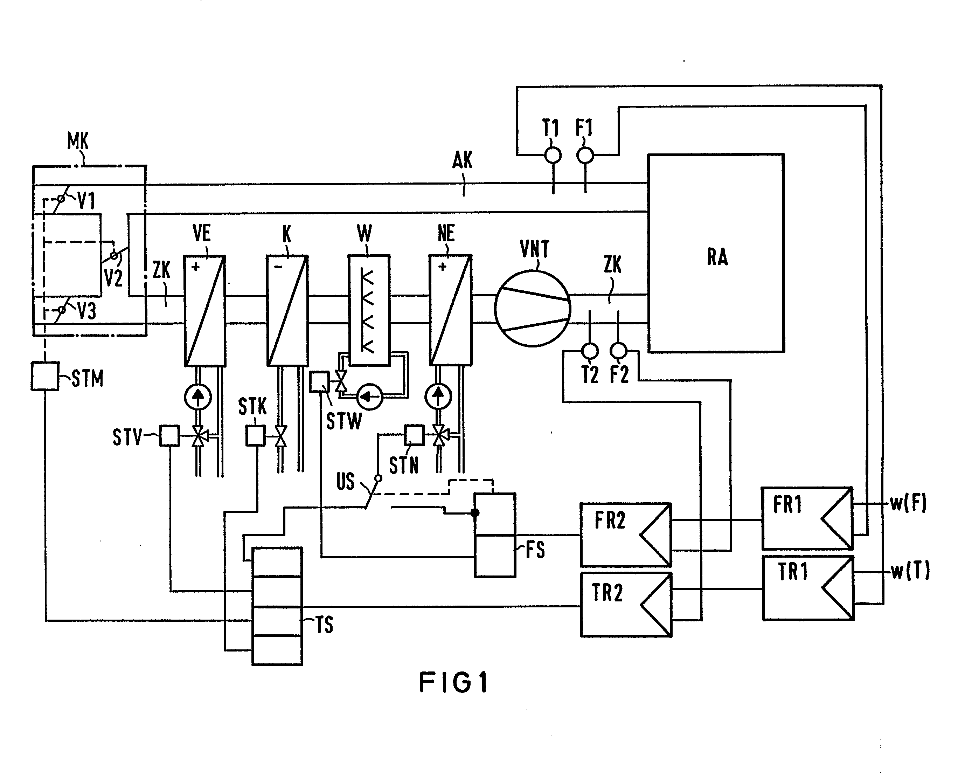

In Figur 1 ist mit RA ein zu klimatisierender Raum bezeichnet, dem über einen Zuluftkanal ZK Luft zugeführt und aus dem über einen Kanal AK die Abluft abgeführt wird. In einer Mischkammer MK mit drei Stellklappen V1, V2, V3 kann Abluft bis zu einem maximal zulässigen Anteil der zuströmenden Außenluft beigemischt werden. Anstelle einer solchen Mischkammer, in der Abluft und Zuluft unmittelbar miteinander gemischt werden, kann auch ein Wärmetauscher oder dergleichen eingesetzt werden. Nach der Mischkammer liegen im Zuluftkanal hintereinander ein Vorerhitzer VE, ein Kühler K, ein Befeuchter W und ein Nacherhitzer NE. Der Kühler kann auch vor dem Vorerhitzer angeordnet sein. Ein Ventilator VNT sorgt für die gewünschte Strömung von Zu-und Abluft. Jedes Klimaaggregat weist einen Stellantrieb STM, STV, STK, STW, STN auf, von denen die Stellantriebe STK, STM und STV an die ersten drei Stufen einer Temperatur-Sequenzsteuerung TS angeschlossen sind und der Stellantrieb STW mit einer Stufe einer Feuchte-Sequenzsteuerung FS verbunden ist. Der Stellantrieb STN des Nacherhitzers NE ist über einen Umschalter US wahlweise an die vierte Stufe der Temperatur-Sequenzsteuerung TS oder an die zweite Stufe der Feuchte-Sequenzsteuerung FS anschließbar. Die gestrichelte Linie von der zweiten Stufe der Feuchte-Sequenzsteuerung FS zum Umschalter US bedeutet, daß dieser von der Feuchte-Sequenz-Sequenzsteuerung geschaltet wird und daß daher diese Vorrang vor der Temperatur-Sequenzsteuerung TS hat. Die beiden Sequenzsteuerungen TS, FS erhalten ihre Eingangssignale von je einem Kaskadenregler TR1, TR2 bzw. FR1, FR2. Im Abluftkanal AK sind ein Temperaturfühler T1 und ein Feuchtefühler F1 angeordnet, deren Meßsignale Führungsreglern TR1, FR1 zugeführt sind und dort mit den Führungsgrößen für Temperatur w(T) und Feuchte w(F) verglichen werden. Den Folgereglern TR2, FR2 sind die Meßsignale eines Temperaturfühlers T2 und eines Feuchtefühlers F2 zugeführt, die im Zuluftkanal ZK zwischen dem Nacherhitzer NE und dem zu klimatisierenden Raum RA angeordnet sind.

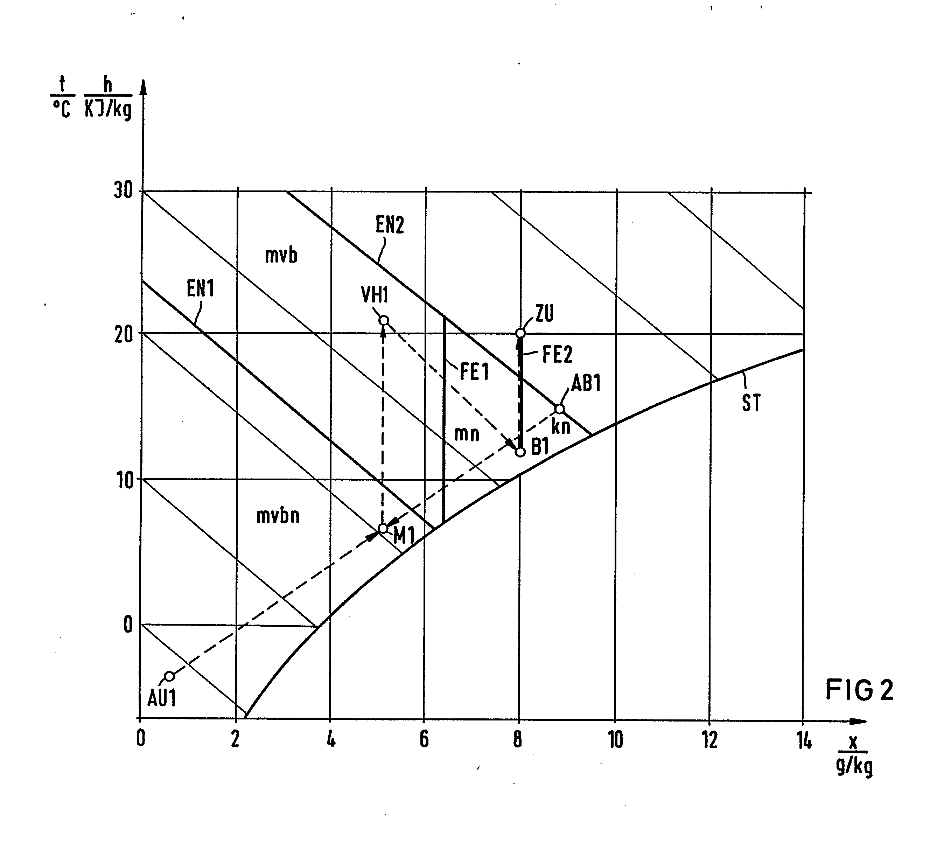

In Figur 2 ist zur Veranschaulichung der Funktion des Ausführungsbeispiels nach Figur 1 ein Zustandsdiagramm für Luft dargestellt. Die Zuluft soll auf eine Temperatur von 20 °C und auf eine Feuchte von 8 g/kg geregelt werden. Der zugehörige Punkt ist mit ZU bezeichnet. In dem in Figur 2 veranschaulichten Beispiel habe die Abluft den Zustand AB1, d. h., sie ist infolge Abkühlung an den Raumwänden und durch Personen im Raum kühler und feuchter als die Zuluft. Der Zustand der Außenluft entspricht dem Punkt AU1. In diesem Falle stellt die Temperaturregelung die Mischkammer auf maximale Beimischung von Abluft zur Außenluft ("Umluft"), so daß am Ausgang der Mischkammer ein Zustand entsprechend Punkt M1 erreicht ist. Zur weiteren Temperaturerhöhung - schaltet die Temperaturregelung den Vorerhitzer VE auf volle Leistung. An seinem Ausgang herrscht der Zustand von Punkt V1. Damit ist zwar schon die gewünschte Zulufttemperatur von 20 °C überschritten; durch die aber noch erforderliche Befeuchtung der Luft, die adiabatisch erfolgt, wird die Temperatur wieder gesenkt (Punkt B1). Durch Regeln des Nacherhitzers NE wird dann der gewünschte Zustand der Zuluft (Punkt ZU) erreicht. In diesem Beispiel stellt die Temperatur-Sequenzsteuerung zwecks minimalen Energiever brauchs und großer Heizleistung den Mischer MK auf maximale Beimischung von Abluft zur Zuluft und den Vorerhitzer auf maximale Heizleistung. Da diese für eine ausreichende Erwärmung der Zuluft nicht ausreicht, wird auch der Nacherhitzer angesteuert. Eine solche Betriebsweise ist für Außenluftzustände unterhalb einer Enthalpielinie EN1 erforderlich, also in dem mit mvbn (= Mischen, Vorheizen, Befeuchten, Nachheizen) bezeichneten Feld.

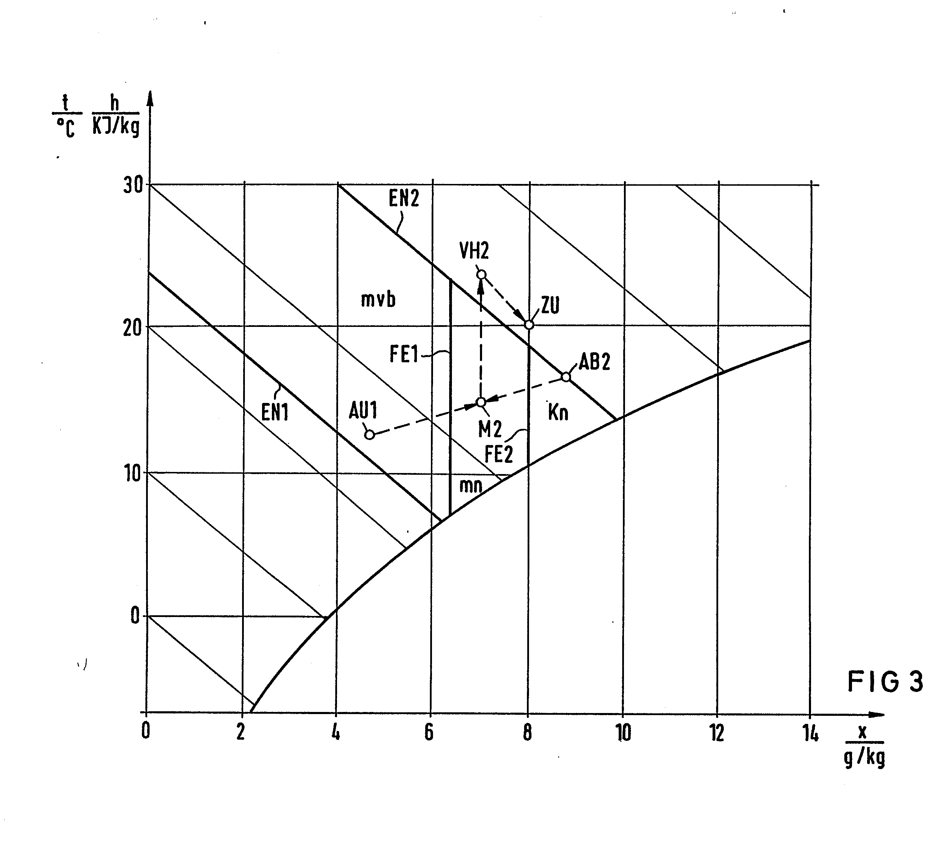

Bei Außenluftzuständen in einem Feld mvb, das von der Enthalpielinie EN1 und der durch den Punkt AB1 laufenden Enthalpielinie EN2 sowie einer Linie FE1 konstanter Feuchte begrenzt ist, ist zur energiesparenden Raumklimatisierung nur noch Mischen, Vorheizen und Befeuchten notwendig. Figur 3 zeigt hierzu ein Beispiel. Mit dem Punkt AB2 ist der Zustand der Abluft und mit AU2 der der Außenluft gekennzeichnet. Die Mischung führt zum Zustand M2, die Vorheizung zum Zustand V2. Durch Befeuchten wird der gewünschte Zustand ZU der Zuluft erreicht.

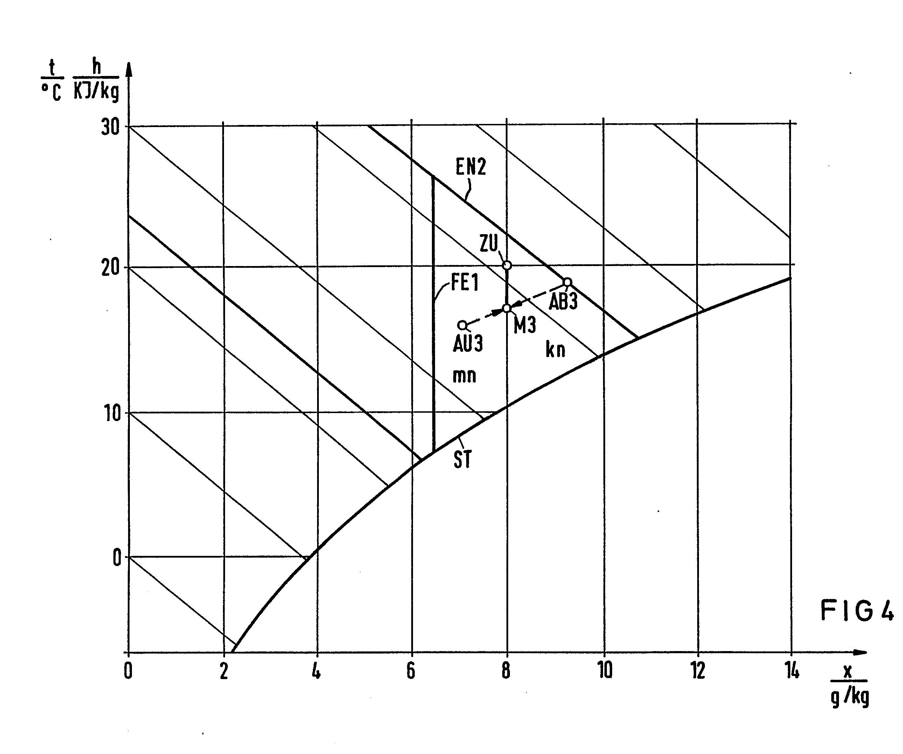

Im Feld mn, das von der Enthalpielinie EN2, der Linie FE1 und einer zweiten Linie FE2 konstanter Feuchte sowie von der Sättigungslinie ST begrenzt wird, ist auch eine Vorheizung nicht mehr erforderlich. Figur 4 zeigt hierzu ein Beispiel. Der Zustand der Abluft ist mit dem Punkt AB3 und der der Zuluft mit AU3 bezeichnet. Um eine zu hohe Feuchte zu vermeiden, schaltet der Feuchteregler den Nacherhitzer ein, mit der Folge, daß der Temperaturregler die Mischkammer so regelt, daß die gewünschte Feuchte (Punkt M3) erreicht wird. Der vom Feuchteregler eingeschaltete Nacherhitzer bringt die Zuluft auf die gewünschte Temperatur.

Liegt der Zustand der Außenluft in dem dreieckförmigen Feld kn, schaltet der Feuchteregler wieder den Nacherhitzer ein, der Zustand ZU kann dann allerdings nicht mehr durch Mischen erreicht werden, sondern es muß der Kühler eingeschaltet werden.

Die in den Figuren 2 bis 4 eingetragenen Bereichsgrenzen, bei deren Überschreiten Klimaaggregate ein-oder ausgeschaltet werden, brauchen bei Inbetriebnahme der neuen Anordnung nicht bekannt sein oder berechnet werden. Das Ein-und Ausschalten der Aggregate erfolgt selbsttätig. In allen Bereichen arbeitet die Anlage energiesparend. Für den Bereich oberhalb der Enthalpielinien EN2 kann zusätzlich eine bekannte enthalpieabhängige Steuerung der Mischkammer eingesetzt werden.

## Ansprüche

1. Anordnung zum Regeln von Temperatur und Feuchte mit mindestens einem Temperatur-und einem Feuchtefühler, die Meßsignale abgeben, in deren Abhängigkeit Klimaaggregate angesteuert werden, **gekennzeichnet durch**
-die Ausgangssignale des Temperaturfühlers (T1, T2) sind einem Temperaturregler (TR1, TR2) mit einer nachgeschalteten Temperatur-Sequenzsteuerung (TS) zugeführt, an welche die die Temperatur beeinflussenden Klimaaggregate (MK, VE, K, NE) angeschlossen sind;
-die Ausgangssignale des Feuchtefühlers (F1, F2) sind einem Feuchteregler (FR1, FR2) mit einer nachgeschalteten Feuchte-Sequenzsteuerung (FS) zugeführt, an welche ein Befeuchter (W) und ein Erhitzer angeschlossen sind.

2. Anordnung nach Anspruch 1, **dadurch gekennzeichnet,** daß als Klimageräte eine Energie-Rückgewinnungseinrichtung, in der Wärme und gegebenenfalls Feuchte von der Abluft an die Zuluft steuerbar übertragen wird und von der in der einen Endstellung "Außenluft" die Außenluft unverändert in den Zuluftkanal geleitet wird und in der anderen Endstellung "Umluft" Wärme und gegebenenfalls Feuchte maximal von der Abluft an die Zuluft übertragen wird, ein Vorerhitzer (VE), ein Kühler (K), ein Befeuchter (W), in dem der Zuluft Feuchtigkeit zugeführt werden kann, und ein Nacherhitzer (NE) vorhanden sind, von denen die Energie-Rückgewinnungseinrichtung (MK), der Kühler (K), der Vorerhitzer (VE) und der Nacherhitzer (NE) an die Temperatur-Sequenzsteuerung (TS) und der Befeuchter (W) und der Nacherhitzer (NE) an die Temperatur-Sequenzsteuerung (TS) und der Befeuchter (W) und der Nacherhitzer (NE) an die Feuchte-Sequenzsteuerung (FS) angeschlossen sind.

3. Anordnung nach Anspruch 2, **dadurch gekennzeichnet,** daß die Temperatur-Sequenz-(TS) in Abhängigkeit des Ausgangssignals des Temperaturreglers (TR1, TR2) die Energie-Rückgewinnungseinrichtung (MK) auf "Außenluft" stellt und dem Stellantrieb (STK) des Kühlers (K) das Regler-Ausgangssignal zuführt, bei abnehmender Außentemperatur den Kühler (K) abschaltet und das Reglerausgangssignal dem Stellantrieb (STM) der Energie-Rückgewinnungseinrichtung (MK) zuführt, bei noch weiter absinkender Außentemperatur die Energie-Rückgewinnungseinrichtung (MK) auf "Umluft" stellt und das Reglerausgangssignal dem Vorerhitzer (VE) zuführt, und daß bei noch weiter absinkender Außentemperatur die Temperatur-Sequenzsteuerung (TS) den Vorerhitzer (VE) auf volle Heizleistung schaltet und das Reglerausgangssignal dem Stellantrieb (STN) des Nacherhitzers (NE) zuführt.

4. Anordnung nach Anspruch 2 oder 3, **dadurch gekennzeichnet,** daß die Feuchte-Sequenzsteuerung (FS) in Abhängigkeit des Ausgangssignals des Feuchtereglers (FR1, FR2) zum Befeuchten der Zuluft den Befeuchter (W) und zum Entfeuchten den Nacherhitzer (NE) einschaltet.

5. Anordnung nach einem der Ansprüche 2 bis 4, **dadurch gekennzeichnet,** daß der Zugriff der Feuchte-Sequenzsteuerung (FS) zum Stellantrieb (STN) des Nacherhitzers (NE) Vorrang vor dem Zugriff der Temperatur-Sequenzsteuerung (TS) hat.

6. Anordnung nach einem der Ansprüche 2 bis 5, **dadurch gekennzeichnet,** daß die Energie-Rückgewinnungseinrichtung eine Mischkammer (MK) ist.

7. Anordnung nach einem der Ansprüche 2 bis 5, **dadurch gekennzeichnet,** daß die Energie-Rückgewinnungseinrichtung ein Wärmetauscher, insbesondere ein hygroskopischer Rotationswärmetauscher ist.

86 P 4410 E

FIG 1

FIG 2

0 238 979

86 P 4410 E

FIG 3

86 P 4410 E

0 238 979

86 P 4410 E

FIG 4